# EUROPEAN PATENT SPECIFICATION

(11) **EP 2 944 609 B1**
(45) Date of publication and mention of the grant of the patent: **22.05.2019**
(21) Application number: 13870463.0
(22) Date of filing: 18.11.2013
(51) Int. Cl.: B01J 13/22

(54) **METHOD FOR PREPARING SUPEROXIDE-GENERATING COMPOSITION, AND SUPEROXIDE-GENERATING COMPOSITION PREPARED BY METHOD**
VERFAHREN ZUR HERSTELLUNG EINER SUPEROXIDERZEUGENDEN ZUSAMMENSETZUNG UND ANHAND DES VERFAHRENS HERGESTELLTE SUPEROXIDERZEUGENDE ZUSAMMENSETZUNG
PROCÉDÉ DE PRÉPARATION D'UNE COMPOSITION PRODUISANT DES SUPEROXYDES ET COMPOSITION PRODUISANT DES SUPEROXYDES PRÉPARÉE PAR LE PROCÉDÉ

(30) Priority: 08.01.2013 KR 20130002100
(43) Date of publication of application: 18.11.2015
(73) Proprietor: KMTR Co., Ltd., Busan 600-016 (KR)
(72) Inventor: PARK, Dae Jin, Busan-si, (KR)
(74) Representative: Valenza, Silvia
(86) International application number: PCT/KR2013/010459
(87) International publication number: WO 2014/109473

(56) References cited:
- JP-A- 2003 012 306
- KR-A- 20040 059 265
- KR-A- 20060 107 089
- KR-A- 20110 114 058
- US-A- 4 132 560
- US-A- 4 923 518
- US-A1- 2005 014 851
- US-A1- 2005 281 884
- MING-GUO MA ET AL: "Fabrication and characterization of Ag/calcium silicate core-shell nanocomposites", MATERIALS LETTERS, NORTH HOLLAND PUBLISHING COMPANY. AMSTERDAM, NL, vol. 65, no. 19, 27 June 2011 (2011-06-27) , pages 3069-3071, XP028251892, ISSN: 0167-577X, DOI: 10.1016/J.MATLET.2011.06.103 [retrieved on 2011-07-01]

## Description

### TECHNICAL FIELD

The present invention relates to a method for preparing a superoxide-generating composition and a superoxide-generating composition prepared by the method, in which the superoxide-generating composition can extend the half-life of superoxide to thereby delay the disappearance of the superoxide and can also naturally generate superoxide without having to use light irradiation or plasma.

### BACKGROUND ART

Generally, superoxide is one of reactive oxygen species and is widely used in air purification and water purification.

Methods for generating superoxide include a plasma method using electricity, a photocatalytic reaction (photo-Fenton reaction, nitrate/nitrite photolysis), etc. The most well-known compound that generates superoxide by the photocatalytic reaction is titanium dioxide (TiO₂). In the photocatalytic reaction, superoxide and hydroxyl radicals are generated by irradiation of UV light. This method is widely used in air purifiers and the like.

Prior art documents related to superoxide generation include Korean Patent Laid-Open Publication No. 10-2008-0019911 (entitled "Air Purification Apparatus"), Korean Patent No. 10-0472751 (entitled "Integrated Toxic Gas Purification Device having Dielectric Barrier Structure"), Korean Patent No. 10-0510833 (entitled "Plasma Generating Device for Air Purification"), and Korean Patent No. 10-0543529 (entitled "Air Filtration System and Method". These prior art documents disclose introducing photocatalysts (semiconductor materials such as titanium dioxide (TiO₂) or tin oxide (SnO₂)) or catalytic materials (precious metals such as Pt, Pd or Rh, transition metal oxides such as CrOx or CuOx, zeolite, etc.) in order to increase the efficiency of treatment of toxic gases. Other prior art documents include US 2005/281884 A1 which defines Ag/Si02 core-shell nanocomposites; US 4132560 A which defines Ti02-silica core particles coated with a silica-based shell; US 2005/014851 A1 defines boehmite-silica cores coated with 3-aminopropyltriethoxysilane and Ming-Guo et al, Materials Letters, 2011, 65, 3069-3071,defining Ag/Si02 core-shell nanostructures.

However, in the prior art technologies as described above, superoxide is generated only by light irradiation or plasma, and thus the amount of superoxide generated is insignificant. In addition, these conventional technologies are inefficient in that a separate light-irradiation or plasma-generation means should be provided in order to use or commercialize these technologies.

### DISCLOSURE OF INVENTION

### TECHNICAL PROBLEM

Accordingly, the present invention has been made in order to solve the above-described problems occurring in the prior art, and it is an object of the present invention to a method for preparing a superoxide-generating composition and a superoxide-generating composition by the method, in which the method includes coating a shell having a calcium compound attached thereto on the surface of a core having a superoxide-generating composition attached thereto so that superoxide generated from the core can pass through the shell having the calcium compound attached thereto to extend the half-life of the superoxide to thereby delay the disappearance of the superoxide, and the superoxide-generating composition can naturally generate superoxide without having to use light irradiation or plasma.

### TECHNICAL SOLUITION

To achieve the above object, the present invention provides a method for preparing a superoxide-generating composition according to claims 1-4, the method including the steps of: (S100) attaching a superoxide-generating compound to the surface of a first silica precursor to form a core; and (S200) coating the outer surface of the core with a shell having a calcium compound attached to the surface of a second silica precursor to form a shell.

The present invention also provides a superoxide-generating composition according to claim 5 by the above preparation method, the composition including a core and a shell coated on the surface of the core, wherein the core has a superoxide-generating compound attached to the surface thereof, and the shell surrounding the core has a calcium compound attached to the surface thereof.

Herein, step S100 of the method includes the steps of:
(S110) mixing and dispersing 30-40 parts by weight of the first silica precursor in 100 parts by weight of distilled water to obtain a dispersion;
(S120) dissolving 5-10 parts by weight of the superoxide-generating compound in 100 parts by weight of distilled water to obtain an aqueous solution; and
(S130) adding and dispersing 10-30 parts by weight of the aqueous solution of step S120 to 100 parts by weight of the dispersion of step S110.

In addition, step S200 of the method includes the steps of:
(S210) dissolving 5-10 parts by weight of the calcium compound in 100 parts by weight of distilled water to obtain an aqueous solution;
(S220) adding and dispersing 1-5 parts of the aqueous solution of step S210 in 100 parts by weight of the core of step S100 to obtain a dispersion; and
(S230) adding and reacting 120-150 parts by weight of the second silica precursor to and with 100 parts by weight of the dispersion of step S220 to gel the dispersion.

Meanwhile, step S200 of the method may further include step S240 of filtering the gel of step S230 to obtain a crystal, and drying and calcining the crystal at a temperature of 110 to 130°C for 5-15 hours.

Herein, the first silica precursor is a silica sol obtained by mixing 20-40 wt% of silicon oxide (SiO₂) powder having a particle size of 0.2-1.0 with 60-80 wt% of water.

In addition, the superoxide-generating compound is one or a combination of two or more selected from among silver nitrate (AgNO3), gold chloride (AuCl3, HAuCl4), and platinum chloride (PtCl₄).

Moreover, the calcium compound may preferably be one or a combination of two or more selected from among calcium oxide and calcium hydroxide.

Besides, the second silica precursor may be one or a combination of two or more selected from among tetraethoxyorthosilicate (TEOS), methyltrimethoxysilane (MTMS), tetramethoxyorthosilicate (TMOS), tetrapropoxyorthosilicate (TPOS), tetrabutoxyorthosilicate (TBOS), tetrapentoxyorthosilicate (TPEOS), tetra (methylethylketoxime) silane, vinyl oxime silane (VOS), phenyl tris(butanone oxime)silane (POS), and methyl oxime silane (MOS).

### ADVANTAGEOUS EFFECTS

The superoxide-generating composition according to the present invention can extend the half-life of superoxide to thereby delay the disappearance of the superoxide, and can also naturally generate superoxide without having to use light irradiation or plasma.

### BRIEF DESCRIPTION OF THE DRAWINGS

FIG. 1 is a flow chart showing a method for preparing an antimicrobial composition according to an embodiment of the present invention.
FIG. 2 is a schematic view showing the structure of an antimicrobial composition according to an embodiment of the present invention.
FIGS. 3 and 4 are graphs showing the amount of superoxide generated from an antimicrobial composition according to the reference examples of table 1.

### BEST MODE FOR CARRYING OUT THE INVENTION

The present invention for achieving the above-mentioned advantageous effects is directed to a method for preparing a superoxide-generating composition and a superoxide-generating composition prepared by the method.

Hereinafter, a method for preparing a superoxide-generating composition according to the present invention will be described in detail.

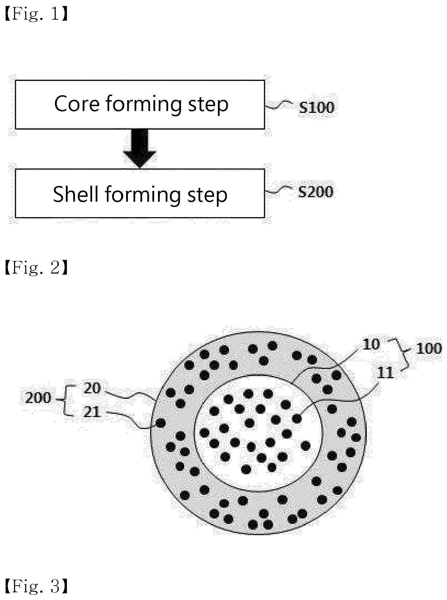

As shown in FIG. 1, a method for preparing a superoxide-generating composition according to the present invention comprises the steps of: (S100) attaching a superoxide-generating compound to the surface of a first silica precursor to form a core; and (S200) coating the outer surface of the core with a shell having a calcium compound attached to the surface of a second silica precursor to form a shell.

Step S100 of the method is a step of forming a superoxide-generating core, and comprises the steps of: (S110) mixing and dispersing 30-40 parts by weight of the first silica precursor in 100 parts by weight of distilled water to obtain a dispersion; (S120) dissolving 5-10 parts by weight of the superoxide-generating compound in 100 parts by weight of distilled water to obtain an aqueous solution; and (S130) adding and dispersing 10-30 parts by weight of the aqueous solution of step S120 to 100 parts by weight of the dispersion of step S110.

Herein, the first silica precursor is a precursor to which the superoxide-generating compound is attached. As the first silica precursor, a silica sol is used. The silica sol that is used in the present invention is obtained by mixing 20-40 wt% of silicon dioxide (SiO₂) powder having a particle size of 0.2-1.0 with 60-80 wt% of water. If the silicon oxide powder has a particle size of less than 0.2 or the content thereof is less than 20 wt%, it will not properly function as a precursor to which the superoxide-generating composition is attached, and if the silicon oxide powder has a particle size of less than 1.0 or the content thereof is less than 40 wt%, the antimicrobial activity of the composition will be reduced by the precursor.

Meanwhile, if the first silica precursor is used in an amount of less than 30 parts by weight based on 100 parts by weight of distilled water, it will not properly react with the aqueous solution of the superoxide-generating compound so that the reaction yield will be reduced, and if the first silica precursor is used in an amount of more than 40 parts by weight, it will not be properly dispersed in distilled water.

In addition, the superoxide-generating compound that is used in the present invention is a compound capable of generating superoxide, and is one or a combination of two or more selected from among silver nitrate (AgNO3), gold chloride (AuCl3, HAuCl4), and platinum chloride (PtCl₄). If the superoxide-generating compound is used in an amount of less than 5 parts by weight based on 100 parts by weight of distilled water, the composition will not exhibit sufficient antimicrobial activity, and if the superoxide-generating compound is used in an amount of more than 10 parts by weight, it will not properly dispersed in distilled water.

In addition, if the aqueous solution of the superoxide-generating compound is used in an amount of less than 10 parts by weight based on 100 parts by weight of the dispersion of the first silica precursor, the composition will not exhibit sufficient antimicrobial activity, and if it is used in an amount of more than 30 parts by weight, the superoxide-generating compound will not properly react with the first silica precursor so that the reaction yield can be reduced.

Step S200 of the method is a step of forming a shell that functions to react with superoxide generated from the core to thereby extend the half-life of the superoxide. Step S200 comprises the steps of: (S210) dissolving 5-10 parts by weight of the calcium compound in 100 parts by weight of distilled water to obtain an aqueous solution; (S220) adding and dispersing 1-5 parts of the aqueous solution of step S210 in 100 parts by weight of the core of step S130 to obtain a dispersion; and (S230) adding and reacting 120-150 parts by weight of the second silica precursor to and with 100 parts by weight of the dispersion of step S220 to form gel, thereby forming a shell.

Herein, the calcium compound is used in order to react with superoxide generated from the core to extend the half-life of the superoxide to thereby delay the disappearance of the superoxide. The calcium compound that is used in the present invention may be calcium oxide or calcium hydroxide.

If the calcium compound is used in an amount of less than 5 parts by weight based on 100 parts by weight of distilled water, the above-described effect of the calcium compound will be insufficient, and if the calcium compound is used in an amount of more than 10 parts by weight, it will not be properly dispersed in distilled water.

If the aqueous solution of the calcium compound is used in an amount of less than 1 part by weight based on 100 parts by weight of the core prepared in step S130, the effect of the calcium compound can be insufficient, and if it is used in an amount of more than 5 parts by weight, the calcium compound will not properly react with superoxide generated from the core so that the reaction yield will be reduced.

In addition, the second silica precursor is a precursor to which the calcium compound is attached. The second silica precursor that is used in the present invention may be one or a combination of two or more selected from among tetraethoxyorthosilicate (TEOS), methyltrimethoxysilane (MTMS), tetramethoxyorthosilicate (TMOS), tetrapropoxyorthosilicate (TPOS), tetrabutoxyorthosilicate (TBOS), tetrapentoxyorthosilicate (TPEOS), tetra(methylethylketoxime)silane, vinyl oxime silane (VOS), phenyl tris(butanone oxime)silane (POS), and methyl oxime silane (MOS). If the second silica precursor is used in an amount of less than 120 parts by weight based on 100 parts by weight of the dispersion prepared in step S220, the calcium compound will not be properly coated on the surface of the core, and if it is used in an amount of more than 150 parts by weight, the effect of extending the half-life of superoxide by the reaction of the calcium compound with superoxide will be insufficient.

Most preferably, the second silica precursor consists of 20-40 parts by weight of TEOS (tetraethoxysilane) and 100-110 parts by weight of MTMS (methyltrimethoxysilane).

In the case in which the second silica precursor consists of TEOS and MTMS as described above, if the content of TEOS in the second silica precursor is less than 20 parts by weight, the calcium compound will not be properly coated on the surface of the core, and if it is more than 40 parts by weight, the effect of extending the half-life of superoxide by the reaction of the calcium compound with superoxide will be insufficient.

In addition, if the content of MTMS in the second silica precursor is less than 100 parts by weight, the calcium compound will not be properly coated on the surface of the core, and if it is more than 110 parts by weight, the effect of extending the half-life of superoxide by the reaction of the calcium compound with superoxide will be insufficient.

Herein, step S200 of forming the shell may further comprise step S240 of filtering the gel of step S230 to obtain a crystal, and drying and calcining the crystal at a temperature of 110 to 130°C for 5-15 hours. If step S220 is performed, the utility of the composition can further be increased. If the drying and calcining process is performed at a temperature out of the above temperature range, the crystal will not be properly dried and calcined.

According to the present invention, as shown in FIG. 2, the surface of a core 100 having a superoxide-generating compound 11 attached to a first silica precursor 10 is coated with a shell 200 having a calcium compound 21 attached to a second silica precursor 20, thereby preparing a superoxide-generating composition. This superoxide-generating composition can naturally generate superoxide without having to use light irradiation or plasma.

Hereinafter, the present invention will be described in further detail with reference to examples, but the scope of the present invention is not limited to these examples.

### 1: Formation of core

### Preparation Example 1

10 parts by weight of a first silica precursor, which is a silica sol obtained by mixing 20 wt% of powdery silicon oxide (SiO₂) powder having a particle size of 0.2 with 80 wt% of water, was mixed with and dispersed in 100 parts by weight of distilled water (S110). Meanwhile, 10 parts by weight of silver nitrate (AgNO₃) as a superoxide-generating compound was dissolved in 100 parts by weight of distilled water (S120). Then, 10-30 parts by weight of the aqueous solution of the superoxide-generating compound, prepared in step S120, was added to and dispersed in 100 parts by weight of the dispersion of the first silica precursor, prepared in step S110 (S130), thereby forming a core.

### Preparation Example 2

40 parts by weight of a first silica precursor, which is a silica sol obtained by mixing 40 wt% of powdery silicon oxide (SiO₂) powder having a particle size of 0.1 with 60 wt% of water, was mixed with and dispersed in 100 parts by weight of distilled water (S110). Meanwhile, 5 parts by weight of silver chloride (AuCl₃, HAuCl₄) as a superoxide-generating compound was dissolved in 100 parts by weight of distilled water (S120). Then, 10-30 parts by weight of the aqueous solution of the superoxide-generating compound, prepared in step S120, was added to and dispersed in 100 parts by weight of the dispersion of the first silica precursor, prepared in step S110 (S130), thereby forming a core.

### 2: Preparation of antimicrobial composition

### Reference example 1

A core was formed according to Preparation Example 1 above. In a shell formation step (S200), 10 parts by weight of calcium oxide as a calcium compound was dissolved in 100 parts by weight of distilled water (S210), and 1 part by weight of the aqueous solution of calcium oxide, prepared in step S210, was added to and dispersed in 100 parts by weight of the core (S220). Then, 20 parts by weight of TEOS (tetraethoxysilane) and 100 parts by weight of MTMS (methyltrimethoxysilane) were added to and reacted with 100 parts by weight of the dispersion resulting from step S220 to form a gel (S230). The gel compound resulting from step S230 was filtered, and the resulting crystal was dried and calcined at 120°C for 10 hours (S240), thereby preparing an antimicrobial composition.

### Reference example 2

A core was formed according to Preparation Example 1 above. In a shell formation step (S200), 5 parts by weight of calcium hydroxide as a calcium compound was dissolved in 100 parts by weight of distilled water (S210), and 5 parts by weight of the aqueous solution of calcium hydroxide, prepared in step S210, was added to and dispersed in 100 parts by weight of the core (S220). Then, 40 parts by weight of tetramethoxyorthosilicate (TMOS) and 110 parts by weight of tetra(methylethylketoxime)silane were added to and reacted with 100 parts by weight of the dispersion resulting from step S220 to form a gel (S230). The gel compound resulting from step S230 was filtered, and the resulting crystal was dried and calcined at 120°C for 10 hours (S240), thereby preparing an antimicrobial composition.

### Comparative Example 1

85 wt% of zeolite powder having a particle size of 10 *µ*m was mixed with 15 wt% of silica nanotubes having an average inner diameter of 45 nm and an average length of 20 *µ*m and containing 70000 ppm of copper nanoparticles. The mixture was formed into a ball having a diameter of 10 mm, and then calcined at 1100°C, thereby preparing an antimicrobial composition.

### Comparative Example 2

45 parts by weight of silica nanotubes containing silver nanoparticles, 30 parts by weight of DISPERBYK-190 (BYK Chemie GmbH, Germany) as a dispersing agent, 30 parts by weight of butyl glycol as a co-solvent, and 4 parts by weight of BYK-024 (BYK Chemie GmbH, Germany) as a defoaming agent, were mixed and dispersed in 100 parts by weight of distilled water, thereby preparing an antimicrobial composition.

Herein, the silica nanotubes used contained pores having a size of 30-50 nm, had a length of 1-30, and contained 30000 ppm of silver nanoparticles.

### 3: Evaluation of the amount of superoxide generated

### A: Evaluation of the amount of superoxide generated when NaOH was added

10 ml of distilled water was placed in 60-Pi Petri dishes, and 0.2 g, 1 g, 2 g, 5 g and 10 g (0.02, 0.1, 0.2, 0.5 and 1 g/ml of distilled water) of each of the ball-shaped antimicrobial compositions prepared in the reference examples and the Comparative Examples was added to the Petri dishes and immersed in the distilled water for 3 hours. Then, NaOH reagent was added to each of the compositions at a concentration of 100 *µ*ℓ per ml of distilled water in order to extend the half-life of superoxide to thereby delay the disappearance of superoxide. Then, the amount of superoxide generated was measured by a luminescence measurement method, and the results of the measurement are shown in Table 1 below and FIG. 3.

**Table 1 (Examples 1 and 2 are reference examples)**

| (unit: µM) | | | | |
|---|---|---|---|---|
| | Example 1 | Example 2 | Comp. Ex. 1 | Comp. Ex. 2 |
| 0.02g | 1.12 | 1.11 | 1.09 | 1.08 |
| 0.1g | 1.19 | 1.17 | 0.66 | 0.65 |
| 0.2g | 1.25 | 1.22 | 0.57 | 0.50 |
| 0.5g | 1.26 | 1.24 | 1.04 | 1.03 |
| 1g | 1.27 | 1.26 | 1.26 | 1.25 |

As can be seen in Table 1 above, the superoxide-generating compositions of reference examples 1 and 2 generated larger amounts of superoxide compared to those of Comparative Examples 1 and 2. Particularly, as shown in FIG. 3, the composition of reference example 1 generated a larger amount of superoxide compared to Comparative Example 1, and the amount of superoxide generated from the composition of reference example 1 was independent of the concentration of the NaOH reagent.

### B: Evaluation of the amount of superoxide generated when NaOH was added (consideration of removal rate)

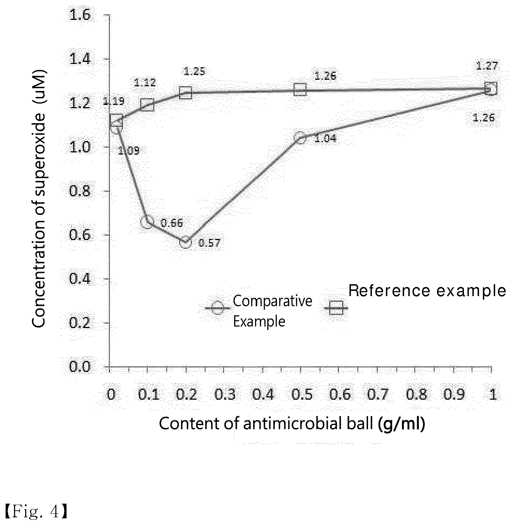

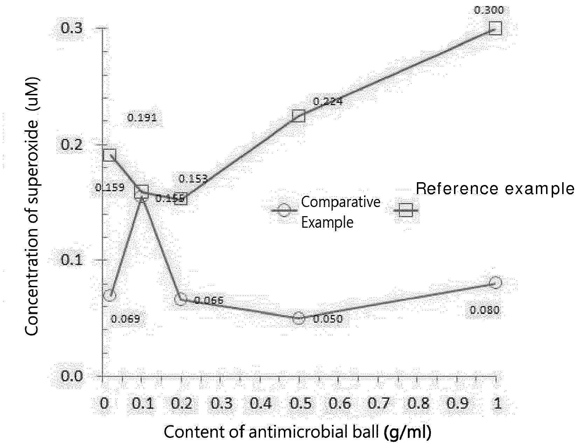

10 ml of distilled water was placed in 60-Pi Petri dishes, and 0.2 g, 1 g, 2 g, 5 g and 10 g (0.02, 0.1, 0.2, 0.5 and 1 g/ml of distilled water) of each of the ball-shaped antimicrobial compositions prepared in the reference examples and the Comparative Examples was added to the Petri dishes and immersed in the distilled water for 3 hours. Then, the amount of superoxide generated was measured by a luminescence measurement method, and the results of the measurement are shown in Table 2 below and FIG. 4.

**Table 2**

| (unit: µM) | | | | |
|---|---|---|---|---|
| | Example 1 | Example 2 | Comp. Ex. 1 | Comp. Ex. 2 |
| 0.02g | 0.191 | 0.190 | 0.069 | 0.068 |
| 0.1g | 0.159 | 0.158 | 0.155 | 0.149 |
| 0.2g | 0.153 | 0.150 | 0.066 | 0.066 |
| 0.5g | 0.224 | 0.222 | 0.050 | 0.045 |
| 1g | 0.300 | 0.298 | 0.080 | 0.077 |

As can be seen in Table 2 above, the superoxide-generating compositions of reference examples 1 and 2 generated larger amounts of superoxide compared to those of Comparative Examples 1 and 2, and the amounts of superoxide generated from the compositions of reference examples 1 and 2 were continuously maintained. Particularly, as can be seen in FIG. 4, the amount of superoxide generated from the composition of reference example 1 was larger than that of Comparative Example 1, and was more long-lasting (the rate of disappearance of superoxide generated from the composition of reference example 1 was lower).

In one aspect, the present invention is directed to a method for preparing a superoxide-generating composition as defined by claims 1 to 4, the method including the steps of: (S100) attaching a superoxide-generating compound to the surface of a first silica precursor to form a core; and (S200) coating the outer surface of the core with a shell having a calcium compound attached to the surface of a second silica precursor to form a shell.

In another aspect, the present invention is also directed to a superoxide-generating composition as defined in claim 5, prepared by the above preparation method, the composition including a core and a shell coated on the surface of the core, wherein the core has a superoxide-generating compound attached to the surface thereof, and the shell surrounding the core has a calcium compound attached to the surface thereof.

Herein, step S100 of the method includes the steps of:(S110) mixing and dispersing 30-40 parts by weight of the first silica precursor in 100 parts by weight of distilled water to obtain a dispersion; (S120) dissolving 5-10 parts by weight of the superoxide-generating compound in 100 parts by weight of distilled water to obtain an aqueous solution; and (S130) adding and dispersing 10-30 parts by weight of the aqueous solution of step S120 to 100 parts by weight of the dispersion of step S110.

In addition, step S200 of the method includes the steps of: (S210) dissolving 5-10 parts by weight of the calcium compound in 100 parts by weight of distilled water to obtain an aqueous solution; (S220) adding and dispersing 1-5 parts of the aqueous solution of step S210 in 100 parts by weight of the core of step S100 to obtain a dispersion; and (S230) adding and reacting 120-150 parts by weight of the second silica precursor to and with 100 parts by weight of the dispersion of step S220 to gel the dispersion.

Meanwhile, step S200 of the method may further include step S240 of filtering the gel of step S230 to obtain a crystal, and drying and calcining the crystal at a temperature of 110 to 130°C for 5-15 hours.

Herein, the first silica precursor is a silica sol obtained by mixing 20-40 wt% of silicon oxide (SiO₂) powder having a particle size of 0.2-1.0 with 60-80 wt% of water.

In addition, the superoxide-generating compound may preferably be one or a combination of two or more selected from among silver nitrate (AgNO3), gold chloride (AuCl3, HAuCl4), and platinum chloride (PtCl₄).

Moreover, the calcium compound may preferably be one or a combination of two or more selected from among calcium oxide and calcium hydroxide.

Besides, the second silica precursor may be one or a combination of two or more selected from among tetraethoxyorthosilicate (TEOS), methyltrimethoxysilane (MTMS), tetramethoxyorthosilicate (TMOS), tetrapropoxyorthosilicate (TPOS), tetrabutoxyorthosilicate (TBOS), tetrapentoxyorthosilicate (TPEOS), tetra(methylethylketoxime)silane, vinyl oxime silane (VOS), phenyl tris(butanone oxime)silane (POS), and methyl oxime silane (MOS).

### INDUSTRIAL APPLICABILITY

As described above, the method according to the present invention comprises coating a shell having a calcium compound attached thereto on the surface of a core having a superoxide-generating composition attached thereto so that superoxide generated from the core can pass through the shell having the calcium compound attached thereto to extend the half-life of the superoxide to thereby delay the disappearance of the superoxide. In addition, the superoxide-generating composition according to the present invention can naturally generate superoxide without having to use light irradiation or plasma. Thus, the present invention will be widely used in industrial applications.

## Claims

1. A method for preparing a superoxide-generating composition, the method comprising the steps of:
(S100) attaching a superoxide-generating compound to the surface of a first silica precursor to form a core; and
(S200) coating the outer surface of the core with a shell having a calcium compound attached to the surface of a second silica precursor to form a shell;
wherein step S100 comprises the steps of:
(S110) mixing and dispersing 30-40 parts by weight of the first silica precursor in 100 parts by weight of distilled water to obtain a dispersion; wherein the first silica precursor is a silica sol obtained by mixing 20-40 wt% of silicon oxide (SiO2) powder having a particle size of 0.2-1.0 µm with 60-80 wt% of water;
(S120) dissolving 5-10 parts by weight of the superoxide-generating compound in 100 parts by weight of distilled water to obtain an aqueous solution; wherein the superoxide-generating compound is one or a combination of two or more selected from among silver nitrate (AgNO3), gold chloride (AuCl3, HAuCl4), and platinum chloride (PtCl4);
and
(S130) adding and dispersing 10-30 parts by weight of the aqueous solution of step S120 to 100 parts by weight of the dispersion of step S110;
wherein step S200 comprises the steps of:
(S210) dissolving 5-10 parts by weight of the calcium compound in 100 parts by weight of distilled water to obtain an aqueous solution;
(S220) adding and dispersing 1-5 parts of the aqueous solution of step S210 in 100 parts by weight of the core of step S100 to obtain a dispersion; and
(S230) adding and reacting 120-150 parts by weight of the second silica precursor to and with 100 parts by weight of the dispersion of step S220 to gel the dispersion.

2. The method of claim 1, wherein step S200 of the method further comprise step S240 of filtering the gel of step S230 to obtain a crystal, and drying and calcining the crystal at a temperature of 110 to 130°C for 5-15 hours.

3. The method of claim 1, wherein the calcium compound is one or a combination of two or more selected from among calcium oxide and calcium hydroxide.

4. The method of claim 1, wherein the second silica precursor is one or a combination of two or more selected from among tetraethoxyorthosilicate (TEOS), methyltrimethoxysilane (MTMS), tetramethoxyorthosilicate (TMOS), tetrapropoxyorthosilicate (TPOS), tetrabutoxyorthosilicate (TBOS), tetrapentoxyorthosilicate (TPEOS), tetra(methylethylketoxime)silane, vinyl oxime silane (VOS), phenyl tris(butanone oxime)silane (POS), and methyl oxime silane (MOS).

5. A superoxide-generating composition prepared by the method of any one of claims 1 to 4, the composition comprising a silica core and a silica shell coated on the surface of the core,
wherein the core has a superoxide-generating compound attached to the surface thereof, and the shell surrounding the core has a calcium compound attached to the surface thereof wherein the superoxide-generating compound is one or a combination of two or more selected from among silver nitrate (AgN03), gold chloride (AuCl3, HAuCl4), and platinum chloride (PtCl4).

## Patentansprüche

1. Verfahren zur Herstellung einer Superoxid erzeugenden Zusammensetzung, wobei das Verfahren die Schritte umfasst:
(S100) Aufbringen einer Superoxid erzeugenden Verbindung auf die Oberfläche eines ersten Silica-Vorläufers, um einen Kern zu bilden; und
(S200) Bedecken der äußeren Oberfläche des Kerns mit einer Hülle, bei der eine Calciumverbindung auf der Oberfläche eines zweiten Silica-Vorläufers aufgebracht ist, um eine Hülle zu bilden;
wobei der Schritt S100 die Schritte umfasst:
(S110) Mischen und Dispergieren von 30 - 40 Gewichtsteilen des ersten Silica-Vorläufers in 100 Gewichtsteilen destilliertem Wasser, um eine Dispersion zu erhalten; wobei der erste Silica-Vorläufer ein Silica-Sol ist, das erhalten wurde durch Vermischen von 20 - 40 Gewichtsprozent Siliciumoxid-Pulver (SiO₂), das eine Partikelgröße von 0,2 - 1,0 µm aufweist, mit 60 - 80 Gewichtsprozent Wasser;
(S120) Auflösen von 5 - 10 Gewichtsteilen der Superoxid erzeugenden Verbindung in 100 Gewichtsteilen destilliertem Wasser, um eine wässrige Lösung zu erhalten; wobei die Superoxid erzeugende Verbindung eines oder eine Kombination zweier oder mehrerer von Silbernitrat (AgNO₃), Goldchlorid (AuCl₃, HAuCl₄) und Platinchlorid (PtCl₄) ist;
und
(S130) Hinzugeben und Dispergieren von 10 - 30 Gewichtsteilen der wässrigen Lösung aus dem Schritt S120 zu 100 Gewichtsteilen der Dispersion aus Schritt S110;
wobei der Schritt S200 die Schritte umfasst:
(S210) Auflösen von 5 - 10 Gewichtsteilen der Calciumverbindung in 100 Gewichtsteilen destilliertem Wasser, um eine wässrige Lösung zu erhalten;
(S220) Hinzugeben und Dispergieren von 1 - 5 Gewichtsteilen der wässrigen Lösung aus Schritt S210 in 100 Gewichtsteilen des Kerns aus Schritt S100, um eine Dispersion zu erhalten; und
(S230) Hinzugeben und Umsetzen von 120 - 150 Gewichtsteilen des zweiten Silica-Vorläufers zu und mit 100 Gewichtsteilen der Dispersion aus Schritt S220, um aus der Dispersion ein Gel zu bilden.

2. Verfahren nach Anspruch 1, wobei der Schritt S200 des Verfahrens zudem den Schritt S240 umfasst, in dem das Gel aus Schritt S230 filtriert wird, um einen Kristall zu erhalten, und der Kristall bei einer Temperatur von 110 bis 130 °C für 5 - 15 Stunden getrocknet und kalziniert wird.

3. Verfahren nach Anspruch 1, wobei die Calciumverbindung eines oder eine Kombination zweier oder mehrerer ist, die ausgewählt sind aus Calciumoxid und Calciumhydroxid.

4. Verfahren nach Anspruch 1, wobei der zweite Silica-Vorläufer eines oder eine Kombination zweier oder mehrerer ist, die ausgewählt sind aus Tetraethoxyorthosilikat (TEOS), Methyltrimethoxysilan (MTMS), Tetramethoxyorthosilikat (TMOS), Tetrapropoxyorthosilikat (TPOS), Tetrabutoxyorthosilikat (TBOS), Tetrapentoxyorthosilikat (TPEOS), Tetra(methylethylketoxim)silan, Vinyloximsilan (VOS), Phenyl-tris(butanonoxim)silan (POS) und Methyloximsilan (MOS).

5. Superoxid erzeugende Zusammensetzung, hergestellt durch das Verfahren nach einem der Ansprüche 1 bis 4, wobei die Zusammensetzung einen Silica-Kern und eine die Oberfläche des Kerns bedeckende Silica-Hülle umfasst,
wobei auf der Oberfläche des Kerns eine Superoxid erzeugende Verbindung aufgebracht ist, und auf der den Kern umgebenden Hülle eine Calciumverbindung aufgebracht ist, wobei die Superoxid erzeugende Verbindung eines oder eine Kombination zweier oder mehrerer von Silbernitrat (AgNO₃), Goldchlorid (AuCl₃, HAuCl₄) und Platinchlorid (PtCl₄) ist.

## Revendications

1. Procédé de préparation d'une composition produisant des superoxydes, le procédé comprenant les étapes suivantes :
(S100) la fixation d'un composé produisant des superoxydes à la surface d'un premier précurseur de silice pour former un noyau ; et
(S200) le revêtement de la surface extérieure du noyau avec une enveloppe ayant un composé du calcium fixé à la surface d'un second précurseur de silice pour former une enveloppe ;
dans lequel l'étape S100 comprend les étapes suivantes :
(S110) mélange et dispersion de 30 à 40 parties en poids du premier précurseur de silice dans 100 parties en poids d'eau distillée pour obtenir une dispersion ; dans lequel le premier précurseur de silice est un sol de silice obtenu par mélange de 20 à 40 % en poids de poudre d'oxyde de silicium (SiO2) ayant une taille de particules de 0,2 à 1,0 µm avec 60 à 80 % en poids d'eau ;
(S120) dissolution de 5 à 10 parties en poids du composé produisant des superoxydes dans 100 parties en poids d'eau distillée pour obtenir une solution aqueuse ; dans lequel le composé produisant des superoxydes est un, ou une combinaison de deux ou plus, sélectionnés parmi le nitrate d'argent (AgN03), le chlorure d'or (AuCl3, HAuCl4), et le chlorure de platine (PtCl4) ;
et
(S130) ajout et dispersion de 10 à 30 parties en poids de la solution aqueuse de l'étape S120 à 100 parties en poids de la dispersion de l'étape S110 ;
dans lequel l'étape S200 comprend les étapes suivantes :
(S210) dissolution de 5 à 10 parties en poids de composé du calcium dans 100 parties en poids d'eau distillée pour obtenir une solution aqueuse ;
(S220) ajout et dispersion de 1 à 5 parties de la solution aqueuse de l'étape S210 dans 100 parties en poids du noyau de l'étape S100 pour obtenir une dispersion ; et
(S230) ajout et mise en réaction de 120 à 150 parties en poids du second précurseur de silice à et avec 100 parties en poids de la dispersion de l'étape S220 pour gélifier la dispersion.

2. Procédé selon la revendication 1, dans lequel l'étape S200 du procédé comprend en outre l'étape S240 de filtration du gel de l'étape S230 pour obtenir un cristal, et de séchage et de calcination du cristal à une température de 110 à 130 °C pendant 5 à 15 heures.

3. Procédé selon la revendication 1, dans lequel le composé du calcium est un, ou une combinaison de deux ou plus, sélectionnés parmi l'oxyde de calcium et l'hydroxyde de calcium.

4. Procédé selon la revendication 1, dans lequel le second précurseur de silice est un, ou une combinaison de deux ou plus, sélectionnés parmi le tétraéthoxyorthosilicate (TEOS), le méthyltriméthoxysilane (MTMS), le tétraméthoxyorthosilicate (TMOS), le tétrapropoxyorthosilicate (TPOS), le tétrabutoxyorthosilicate (TBOS), le tétrapentoxyorthosilicate (TPEOS), le tétra(méthyléthylcétoxime)silane, le vinyl oxime silane (VOS), le phényl tris(butanone oxime)silane (POS), et le méthyl oxime silane (MOS).

5. Composition produisant des superoxydes préparée par le procédé selon l'une quelconque des revendications 1 à 4, la composition comprenant un noyau de silice et une enveloppe de silice revêtue sur la surface du noyau,
dans laquelle le noyau a un composé produisant des superoxydes fixé à sa surface, et l'enveloppe entourant le noyau a un composé du calcium fixé à sa surface dans laquelle le composé produisant des superoxydes est un, ou une combinaison de deux ou plus, sélectionnés parmi le nitrate d'argent (AgN03), le chlorure d'or (AuCl3, HAuCl4), et le chlorure de platine (PtCl4).
